# EUROPEAN PATENT SPECIFICATION

(11) **EP 3 941 111 B1**
(45) Date of publication and mention of the grant of the patent: **15.04.2026**
(21) Application number: 19919577.7
(22) Date of filing: 15.03.2019
(51) Int. Cl.: H04W 28/04, H04W 16/14, H04W 72/04, H04L 1/1867, H04L 5/00, H04L 1/1822

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 19.01.2022
(73) Proprietor: NTT DOCOMO, INC., Chiyoda-Ku Tokyo 100-6150 (JP)
(72) Inventor: TAKEDA, Kazuki, Tokyo 100-6150 (JP); HARADA, Hiroki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2019/011008
(87) International publication number: WO 2020/188666

(56) References cited:
- JP-A- 2012 521 697
- US-A1- 2018 019 843
- INTEL CORPORATION: "UCI transmission for eLAA Scells", 3GPP DRAFT; R1-164130, 27 May 2016 (2016-05-27), Nanjing, China, pages 1 - 2, XP051090086
- ZTE: "Considerations on timing relationship for 2 HARQ processes for NB-IoT", 3GPP DRAFT; R1-1612600, 18 November 2016 (2016-11-18), Reno, USA, pages 1 - 5, XP051189641

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

In LTE Rel. 10/11, carrier aggregation (CA) for integrating a plurality of component carriers (CCs) has been introduced in order to widen a band. Each component carrier (CC) is configured with the system band of LTE Rel. 8 as one unit. In carrier aggregation (CA), a plurality of component carriers (CCs) of the same radio base station (eNB: eNodeB) are configured in a user terminal (User Equipment (UE)).

In LTE Rel. 12, dual connectivity (DC) has been introduced in which a plurality of cell groups (CGs) of different radio base stations are configured in a user terminal. Each cell group (CG) is configured to include at least one cell (CC). In dual connectivity (DC), a plurality of component carriers (CCs) of different radio base stations are integrated. For this reason, dual connectivity (DC) is also referred to as inter-base station CA (Inter-eNB CA).

In LTE, hybrid automatic repeat request (HARQ) is used for retransmission control. In the HARQ, according to a reception result of Downlink (DL) data, a user terminal feeds back a transmission confirmation signal (HARQ-Acknowledgement (HARQ-ACK)) regarding the data. The radio base station controls data retransmission, based on the fed back HARQ-ACK.

Furthermore, Patent Literature 1 describes that, for cell-common functionality, a HARQ process set field indicates to a UE the HARQ processes for the UE to report respective HARQ-ACK information associated with PDSCH transmissions for all configured cells. HARQ-ACK information in a HARQ-ACK codebook can be arranged first according to the cell number and then according to the HARQ process number.

### Citation List

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Patent Literature 1: US 2018/019843 A1 relates to HARQ-ACK codebook construction in a wireless communication system with carrier aggregation.

### Summary of Invention

### Technical Problem

It has been studied that a UE performs an HARQ-ACK feedback at a time for a plurality of HARQ processes.

However, unless a method for determining a plurality of HARQ processes is clear, an HARQ-ACK feedback is not appropriately performed and may deteriorate the system performance.

It is therefore an object of the present disclosure is to provide a user terminal and a radio communication method to appropriately transmit an HARQ-ACK feedback for a plurality of HARQ processes.

### Solution to Problem

This object is accomplished by the subject-matter of the independent claims. The dependent claims concern particular embodiments.

### Advantageous Effects of Invention

According to an aspect of the present disclosure, it is possible to appropriately transmit an HARQ-ACK feedback for a plurality of HARQ processes.

### Brief Description of Drawings

FIG. 1 is a diagram to show an example of a relation among an HARQ entity, an HARQ process, and DCI;
FIG. 2 is a diagram to show an example of association of a plurality of specific CC candidates according to Embodiment 1-1-2 and a plurality of values of a specific field;
FIG. 3 is a diagram to show an example of a processing time according to Embodiment 2;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

### Description of Embodiments

### <Unlicensed Band>

In an unlicensed band (for example, a 2.4 GHz band, a 5 GHz band, a 6 GHz band, and the like), for example, it is assumed that a plurality of systems such as a Wi-Fi system and a system (LAA system) for supporting Licensed-Assisted Access (LAA) coexist, and thus it is conceivable that collision avoidance and/or interference control of transmission between the plurality of systems is required.

In LAA of the existing LTE systems (for example, Rel. 13), the transmitting apparatus of data performs listening (Listen Before Talk (LBT), Clear Channel Assessment (CCA), carrier sense, sensing of a channel, sensing, and channel access procedure) for confirming whether or not there is transmission of another apparatus (for example, a base station, a user terminal, a Wi-Fi apparatus, and the like) before transmission of data in the unlicensed band.

For example, the transmitting apparatus may be a base station (for example, a gNB (gNodeB)) in the downlink (DL), and a user terminal (for example, a User Equipment (UE)) in the uplink (UL). A receiving apparatus that receives data from the transmitting apparatus may be a user terminal in the DL and a base station in the UL, for example.

In LAA of the existing LTE systems, the transmitting apparatus starts data transmission after the elapse of a certain period (for example, immediately after or a period of back-off) since detection that there is no transmission of another apparatus in LBT (idle state).

The use of an unlicensed band has also been under study for future radio communication systems (also referred to as, for example, 5G, 5G+, New Radio (NR), 3GPP Rel. 15 or later versions, or the like). An NR system using an unlicensed band may be referred to as an NR-Unlicensed (U) system, an NR LAA system, or the like.

Dual Connectivity (DC) of a licensed band and an unlicensed band, and Stand-Alone (SA) of the unlicensed band may also be included in NR-U.

A node (for example, the base station or the UE) in NR-U starts transmission after confirming that a channel is available (idle) by means of LBT, because of coexistence of another system or another operator.

In the NR-U system, the base station (for example, the gNB) or the UE acquires a Transmission Opportunity (TxOP) when LBT results indicate idle, and performs transmission. The base station or the UE does not perform transmission when the LBT results indicate busy (LBT-busy). The time of the transmission opportunity is referred to as Channel Occupancy Time (COT).

Note that the LBT-idle may be interpreted as LBT success. The LBT-busy may be interpreted as LBT failure.

### <HARQ Process>

One independent HARQ entity may exist per cell (CC) or cell group (CG) for a UE configured with carrier aggregation (CA) or dual connectivity (DC). The HARQ entity may manage a plurality of HARQ processes in parallel.

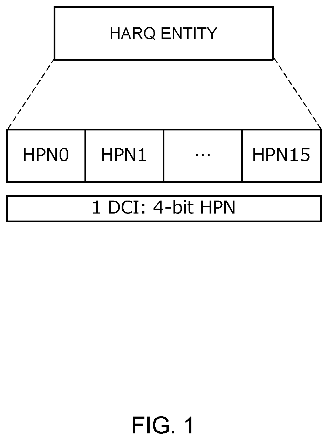

In a radio communication system, data transmission is based on scheduling, and scheduling information for Downlink (DL) data transmission is carried in downlink control information (DCI). FIG. 1 is a diagram to show an example of a relation among an HARQ entity, an HARQ process, and DCI. An HARQ process number (HPN) is assigned to an HARQ process. The DCI includes a 4-bit HARQ process number field indicating an HARQ process number used for current data transmission. The HARQ entity manages a plurality (up to 16) of HARQ processes in parallel. In other words, as HARQ process numbers, there are HPN0 to HPN15. The HARQ process number is also referred to as an HARQ process ID (HARQ process identifier).

A unit of transmitting Uplink (UL) data on a Physical Uplink Shared Channel (PUSCH) and a unit of transmitting DL data on a Physical Downlink Shared Channel (PDSCH) may be referred to as a transport block (TB). The TB is a unit handled by a Media Access Control (MAC) layer. HARQ (retransmission) control may be performed for each TB or for each code block group (CBG) including one or more code blocks (CB) in a TB.

A user terminal transmits information indicating positive acknowledgement (ACK)/negative acknowledgement (NACK) of HARQ, which indicates whether or not decoding of the DL transport block received using PDSCH is successful, to a base station by using a PUCCH (Physical Uplink Control Channel), PUSCH, or the like.

When a plurality of pieces of UL data or a plurality of pieces of DL data are not spatially multiplexed in a physical layer, a single HARQ process corresponds to one transport block (TB). When a plurality of pieces of UL data or a plurality of pieces of DL data are spatially multiplexed in a physical layer, a single HARQ process may correspond to one or more transport blocks (TB).

### <HARQ-ACK Processing Time>

In NR, PDSCH processing time, PUSCH processing time, and the like are being studied. Note that the processing time may be interpreted as preparation time, preparation procedure time, processing procedure time, or the like.

The PDSCH processing time may be a period from the end of the last symbol of the PDSCH transmitting the transport block to a UL symbol. The UE may provide an enabled HARQ-ACK with a symbol that is the same as or later than the UL symbol.

The PUSCH processing time may be a period from the end of the last symbol of the downlink control channel (PDCCH (Physical Downlink Control Channel)) transmitting the Downlink Control Information (DCI) for scheduling the PUSCH to a UL symbol. The UE may transmit the PUSCH with a symbol that is the same as or later than the UL symbol.

The PDSCH processing time may be determined on the basis of a parameter N₁ (which may be referred to as PDSCH decoding time), and the PUSCH processing time may be determined on the basis of a parameter N₂ (which may be referred to as PUSCH preparation time). N₁ may be referred to as PDSCH processing time for PDSCH processing capability 1. N₂ may be referred to as the PUSCH preparation time for PUSCH timing capability 1.

N₁ may be determined on the basis of the downlink SCS in which the PDSCH has been transmitted and the SCS of the UL channel (for example, PUCCH, PUSCH) in which the above-described HARQ-ACK is transmitted. For example, N₁ may be determined on the basis of the smallest SCS of these SCSs, and may be determined to be 8 to 20 symbols, such as 8 symbols when the smallest SCS is 15 kHz, and the like. N₁ may be determined to be 13 to 24 symbols when an additional PDSCH DMRS is configured.

N₂ may be determined on the basis of the downlink SCS in which the PDCCH transmitting the DCI for scheduling the PUSCH has been transmitted, and the SCS in the UL channel in which the PUSCH is transmitted. For example, N₂ may be determined on the basis of the smallest SCS of these SCSs, and may be determined to be 10 to 36 symbols, such as 10 symbols when the smallest SCS is 15 kHz, and the like.

In other words, the above-described processing time (and the parameters related to the processing time (N₁, N₂, or the like)) may be according to a value defined by numerology corresponding to the smallest SCS among a PDCCH/PDSCH and a PUCCH/PUSCH. In other words, N₁, N₂, and the like are defined as common values among CCs having different numerology even when the numerology coexisting CA is configured.

Note that the PDSCH processing time may be determined on the basis of parameters such as d₁, ₁, d₁, ₂, d₁, ₃, in addition to N₁. The PUSCH processing time may be determined on the basis of parameters such as d_{2, 1}, d_{2, 2}, in addition to N₂.

Here, d_{1, 1} may be 0 when the HARQ-ACK is transmitted on the PUCCH and may be 1 when the HARQ-ACK is transmitted in the PUSCH. When the UE is configured with a plurality of active component carriers, d_{1, 2} may be a value based on the maximum timing difference between the component carriers, and d_{1, 2} may be 0 in other cases. When the PDSCH is mapping type A and the last symbol of the PDSCH is the i-th (i<7) symbol of the slot, d1, 3 may be 7-i, and d_{1, 3} may be 0 in other cases.

d_{2, 1} may be 0 when the first symbol of the PUSCH allocation includes only DMRS, and may be 1 in other cases. d_{2, 2} may be a value based on the maximum timing difference between component carriers when the UE is configured with a plurality of active component carriers, and may be 0 in other cases.

When the HARQ-ACK corresponding to the PDSCH is transmitted using the PUSCH, the UE may transmit the PUSCH with the UL symbol after the time (sum time) that combines the above-described PDSCH processing time and the above-described PUSCH processing time, or the symbol later than the PUSCH.

### <One-Shot Group HARQ-Ack Feedback>

For a frequency for NR-U, it has been studied that a UE receives a request or trigger for a one-time HARQ-ACK feedback (a one-shot group HARQ-ACK feedback, a one-shot group HARQ-ACK report, a group HARQ-ACK feedback, and a group HARQ-ACK report) for all configured HARQ processes.

This request may be carried in UE-specific DCI carrying a PUSCH grant, UE-specific DCI not scheduling a PDSCH nor a PUSCH, or a UE-common DCI. The UE configured with a dynamic or semi-static HARQ codebook may receive this request.

However, it is unclear which HARQ process is an HARQ process subject to an HARQ-ACK feedback, for example, for which CC the HARQ process is configured.

Thus, the inventors of the present invention came up with the idea of determining, on the basis of a request (indication information, a trigger), at least one of one or more HARQ processes and one or more CCs, the one or more HARQ processes being used for an HARQ-ACK report among a plurality of configured HARQ processes, and the one or more CCs being to transmit an HARQ-ACK report.

Embodiments according to the present disclosure will be described in detail with reference to the drawings as follows. The radio communication methods according to embodiments may be employed independently or may be employed in combination.

Each embodiment is not limited to the frequency for NR-U.

In the present disclosure, NR-U is not limited to LAA and may include a case where an unlicensed band is used as stand-alone.

In the present disclosure, frequency, a band, a spectrum, a carrier, a component carrier (CC), and a cell may be interchangeably interpreted.

In the present disclosure, listening, Listen Before Talk (LBT), Clear Channel Assessment (CCA), carrier sense, sensing, sensing of a channel, channel access procedure may be interchangeably interpreted.

In the present disclosure, the frequency for NR-U, an unlicensed band, an unlicensed spectrum, an LAA SCell, an LAA cell, a frequency to which sensing of a channel is applied before transmission, a frequency that requires sensing of a channel before transmission, a frequency lower than a certain frequency (for example. 6 GHz and 7 GHz) may be interchangeably interpreted.

In the present disclosure, a frequency for NR, a licensed band, a licensed spectrum, a frequency to which sensing of a channel is not applied before transmission, a frequency that does not require sensing of a channel before transmission may be interchangeably interpreted.

Different frame structures may be used for the frequency for NR-U and the frequency for NR.

### (Radio Communication Method)

The UE may receive an HARQ-ACK report request (trigger) for one or more specific HARQ processes.

The UE configured with CA or DC may receive an HARQ-ACK report request for one or more specific HARQ processes. The UE may be indicated about an HARQ-ACK report request for one or more specific HARQ processes in the frequency for NR-U by a MAC CE. The UE configured with a dynamic or semi-static HARQ-ACK codebook may be indicated about an HARQ-ACK report request for one or more specific HARQ processes by the MAC CE.

The specific HARQ processes may be all configured HARQ processes. The configured HARQ process may be an HARQ process in use, an HARQ process whose HARQ process ID has been determined on the basis of receipt (for example, a starting symbol) of DL data (for example, a PDSCH), or an HARQ process that can prepare an HARQ-ACK before the HARQ-ACK report timing.

The UE may report an HARQ-ACK for one or more specific HARQ processes by using one PUSCH or one PUCCH.

The UE may be indicated (configured) about a resource for an HARQ-ACK report (PUSCH or PUCCH) for a specific HARQ process by at least one of DCI, MAC CE, and RRC layer signaling.

When there is an HARQ process that cannot generate an HARQ-ACK (or that does not generate an HARQ-ACK) in one or more specific HARQ processes before the HARQ-ACK report timing, the UE may report an HARQ-ACK regarding an HARQ-ACK value corresponding to the HARQ process as NACK, may report an HARQ-ACK regarding an HARQ-ACK value corresponding to the HARQ process as ACK, need not report an HARQ-ACK corresponding to the HARQ-ACK process (may report a generated HARQ-ACK), and need not report an HARQ-ACK for one or more specific HARQ processes.

When HARQ-ACK bits corresponding to all HARQ processes in one CC are transmitted, the UE may form an HARQ ACK codebook by HARQ-ACK bits arranged in descending (or ascending) order of HARQ process index and transmit the HARQ-ACK codebook. When a plurality of HARQ-ACK bits corresponding to all HARQ processes in a plurality of CCs are transmitted, the UE may form an HARQ-ACK codebook by HARQ-ACK bits arranged in descending (or ascending) order of CC index and arranged in descending (or ascending) order of HARQ process index and transmit the HARQ-ACK codebook.

### <Embodiment 1>

An HARQ-ACK report request for a specific HARQ process may be DCI. The UE may be indicated about an HARQ-ACK report for one or more specific HARQ processes by DCI.

The DCI may be DCI (that carries a grant for a PUSCH) for scheduling a PUSCH (for example, UE-specific DCI). The UE may report an HARQ-ACK for one or more specific HARQ processes by using the PUSCH.

The DCI may be UE-specific DCI that does not schedule a PDSCH nor a PUSCH or may be UE-common DCI.

The DCI may indicate a PUCCH resource. The UE may report an HARQ-ACK for one or more specific HARQ processes by using the PUCCH.

The UE may report an HARQ-ACK for a specific HARQ process in response to request.

The UE may receive the request by DCI.

The specific HARQ processes may be all configured HARQ processes for one or more specific CCs (all HARQ processes configured for a specific CC). The UE may report an HARQ-ACK for all configured HARQ processes of the specific CC.

### - Embodiment 1-1

The UE may be indicated about a specific CC by a specific field in the DCI that carries a request. The UE may be indicated about a CC whose all configured HARQ processes to be reported by a specific field in the DCI that carries a request. The UE may report an HARQ-ACK for all configured HARQ processes for the CC indicated by the specific field.

### -- Embodiment 1-1-1

A specific CC in one or more CCs may be indicated as a specific field.
For example, when the UE is configured with cross carrier scheduling (carrier indication field (CIF)), the specific field may be a CIF, another existing field, or a new field. For example, when cross carrier scheduling for a first CC from a second CC is configured, and a CIF field included in a DCI format monitored by the second CC is a value corresponding to a first CC index, an HARQ-ACK corresponding to all HARQ processes in the first CC may be reported. In this case, HARQ-ACK bits corresponding to all HARQ processes in the first CC may be arranged in descending (or ascending) order of the HARQ process index to form an HARQ-ACK codebook.

### -- Embodiment 1-1-2

One or more specific CCs may be indicated as a specific field.

The UE may be configured with a plurality of specific CC candidates by higher layer signaling (for example, a higher layer parameter, an RRC IE). Each candidate may include one or more CCs. Each of the plurality of specific CC candidates may be associated with a code point (for example, a value, an index) of the specific field. The UE may be indicated about a candidate by a code point of the specific field. The association of the plurality of specific CC candidates and a plurality of specific field values (for example, a table) may be defined in the specifications.

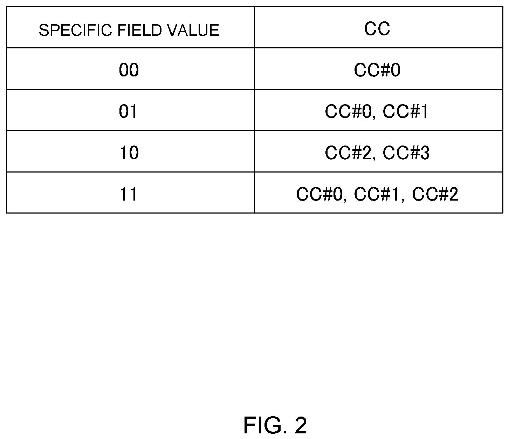

For example, as shown in FIG. 2, when the UE is configured with CA using CC #0, 1, 2, and 3 and a specific field size is 2-bit, the specific field value 00 may be associated with CC #0, the specific field value 01 may be associated with CC #0 and CC #1, the specific field value 10 may be associated with CC #2 and CC #3, and the specific field value 11 may be associated with CC #0, CC #1 and CC #2.

When a plurality of HARQ-ACK bits corresponding to all HARQ processes of a plurality of CCs are transmitted, the plurality of HARQ-ACK bits may be arranged in descending (or ascending) order of CC index and arranged in descending (or ascending) order of HARQ process index in each CC to form an HARQ-ACK codebook.

According to Embodiment 1-1, the UE can be indicated about an appropriate CC for which an HARQ-ACK is to be reported.

### - Embodiment 1-2

The UE may be implicitly indicated about a specific CC by the specific information. The UE may be implicitly indicated about a CC whose all configured HARQ processes to be reported by specific information. The UE may obtain a specific CC on the basis of the specific information. The UE may report an HARQ-ACK for all configured HARQ processes of the implicitly indicated CC.

The specific CC may be a CC in which DCI carrying a request has been transmitted.

According to Embodiment 1-2, increase of indication overhead can be prevented because a DCI field is not needed to be added.

### - Embodiment 1-3

The specific CC may be any CC satisfying specific conditions. The UE may report an HARQ-ACK for all configured HARQ processes in all CCs satisfying the specific conditions.

### -- Embodiment 1-3-1

The specific CC may include all CCs in a specific cell group. The specific cell group may be a cell group configured with an HARQ process, a cell group including a CC in which DCI carrying a request has been transmitted, a master cell group (MCG), or a secondary cell group (SCG).

### -- Embodiment 1-3-2

The specific CC may include all CCs in an unlicensed band or an unlicensed spectrum.

### -- Embodiment 1-3-3

The specific CC may include all CCs in a carrier (a frequency band) that requires LBT.

According to Embodiment 1-3, increase of indication overhead can be prevented because a DCI field is not needed to be added.

According to above Embodiment 1, an HARQ-ACK report request for a specific HARQ process can be promptly performed and increase of overhead can be suppressed.

### <Embodiment 2>

The HARQ-ACK report request for a specific HARQ process may be a MAC CE (PDSCH). The UE may be indicated about an HARQ-ACK report for a specific HARQ process by the MAC CE. The UE configured with CA or DC may be indicated about an HARQ-ACK report for one or more specific HARQ processes by the MAC CE.

The UE may be indicated about an HARQ-ACK resource for the PDSCH (for example, PUCCH) by DCI scheduling a PDSCH that carries a MAC CE indicating a request (a request MAC CE).

The request MAC CE may include one or more fields to indicate about which HARQ process to be reported.

The request MAC CE may include one or more fields to indicate about which CC is used to report an HARQ-ACK for all configured HARQ processes.

The processing time from receiving the request MAC CE until reporting an HARQ-ACK for a specific HARQ-ACK process (the required time for processing from receiving the request MAC CE until reporting the HARQ-ACK) need not be equal to N₁. N₁ may be a time period from the end of receiving a PDSCH including a MAC CE until transmitting an HARQ-ACK for the PDSCH.

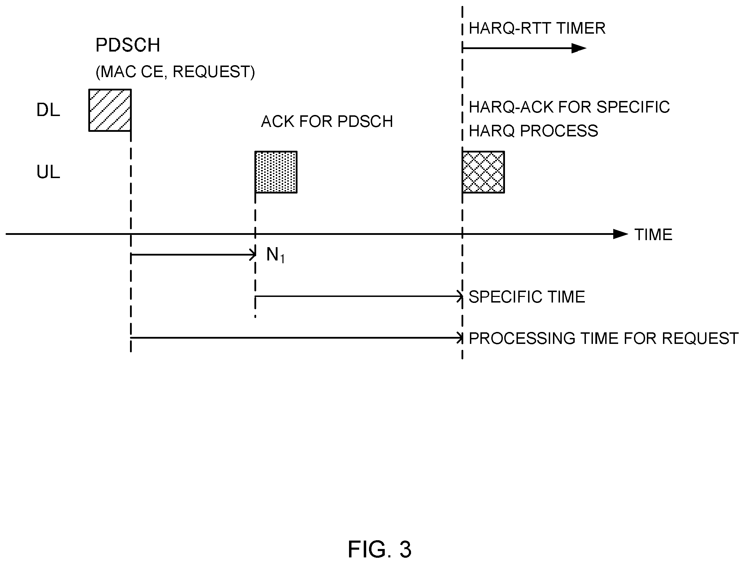

As shown in FIG. 3, the processing time may be longer than N₁. The processing time may be from receiving the request MAC CE until the elapse of a specific time period since transmission of an ACK for the request MAC CE. The specific time period may be 3 ms, or 3-slot (42 symbol) for a specific subcarrier spacing (for example, 15 kHz).

In the base station, an HARQ-Round Trip Time (RTT) timer for a specific HARQ process may start after the elapse of the processing time from transmission of the request MAC CE (after the elapse of the specific time period from receiving an ACK for a MAC CE). When the HARQ RTT timer has expired, re-transmission of the data corresponding to the specific HARQ process (for example, a PDSCH) may be scheduled. The UE may receive DCI for re-transmission schedule and need not receive an additional request for an HARQ-ACK for the specific HARQ process.

According to Embodiment 2, the HARQ process used for an HARQ ACK report can be more flexibly indicated.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

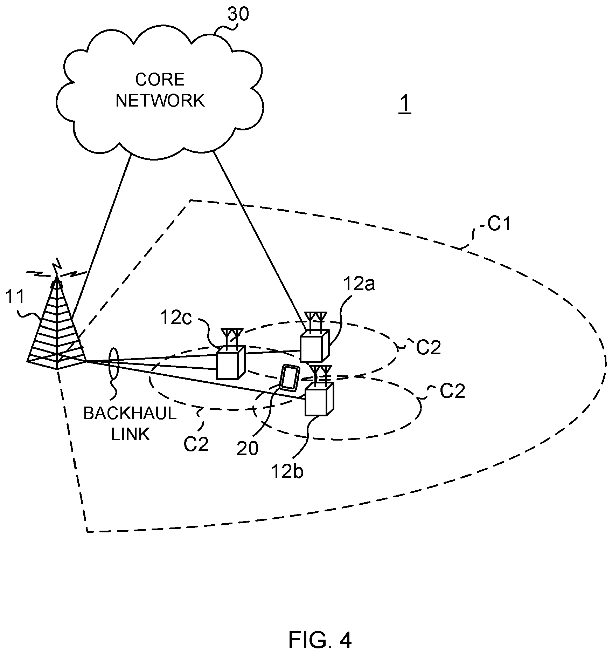

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

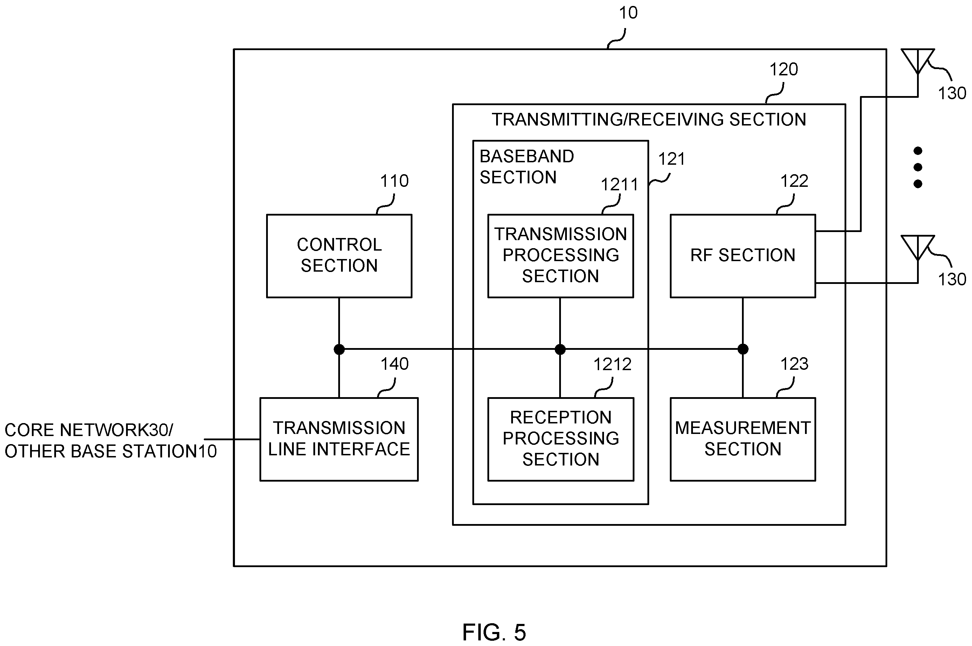

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120 and the transmitting/receiving antennas 130.

### (User Terminal)

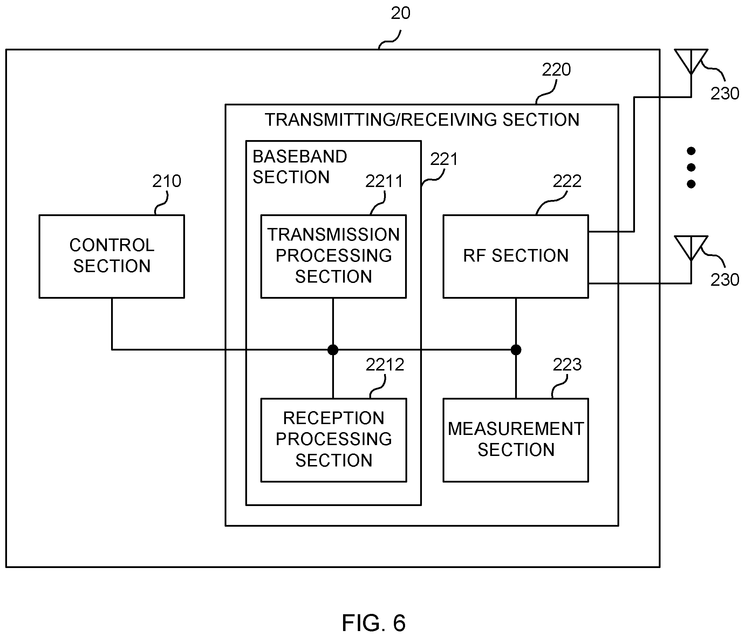

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223.

The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220, the transmitting/receiving antennas 230, and the communication path interface 240.

Note that the transmitting/receiving section 220 may receive indication information related to an HARQ-ACK (for example, DCI, a MAC CE, a request, a trigger). The control section 210 may report an HARQ-ACK corresponding to a plurality of HARQ processes based on the indication information (a specific HARQ process) on an uplink channel (PUSCH or PUCCH).

The indication information may be downlink control information (DCI). The plurality of HARQ processes may correspond to a component carrier based on the downlink control information (for example, a cell).

The downlink control information may include information indicating the component carrier (for example, a field, a CIF, a new field, and the like).

The plurality of HARQ processes may correspond to all component carriers in a given cell group or all component carriers to which sensing of a channel is applied.

The indication information is a MAC CE and may include at least one of information indicating the plurality of HARQ processes and information indicating a component carrier corresponding to the plurality of HARQ processes.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

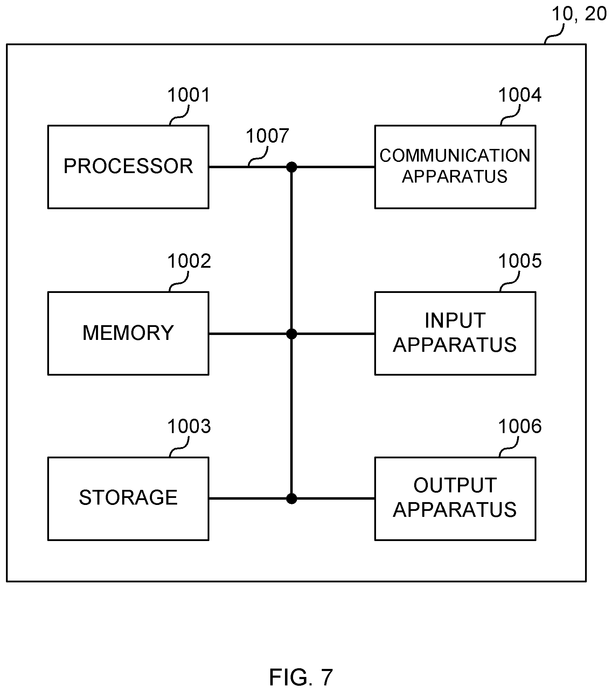

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

## Claims

1. A terminal (20) comprising:
a receiving section (220) adapted to receive, in a cell in a cell group, terminal-specific downlink control information that does not schedule a physical downlink shared channel nor a physical uplink shared channel, wherein the downlink control information includes a request for a hybrid automatic repeat request, HARQ,-acknowledgement, ACK, codebook including HARQ-ACK information bits for all HARQ processes in all cells in the cell group and includes an indication of a resource of a physical uplink control channel;
a control section (210) adapted to determine the HARQ-ACK codebook based on the HARQ processes and the downlink control information; and
a transmitting section (220) adapted to transmit the HARQ-ACK codebook on the physical uplink control channel,
wherein HARQ-ACK processes are configured for each of the cells, and
the control section (210) is adapted to arrange the HARQ-ACK information bits into the HARQ-ACK codebook in ascending order of the corresponding cell index, and is adapted to arrange specific HARQ-ACK information bits corresponding to the same cell index of the HARQ-ACK information bits into the HARQ-ACK codebook in ascending order of the corresponding HARQ process number, and
wherein the cell group is configured in a spectrum in which a channel access procedure based on sensing is performed.

2. The terminal (20) according to claim 1, wherein when a HARQ-ACK information bit of the HARQ-ACK information bits is not generated, the control section (210) is adapted to determine the HARQ-ACK information bit as negative acknowledgement, NACK.

3. A radio communication method for a terminal (20), the method comprising:
receiving, in a cell in a cell group, terminal-specific downlink control information that does not schedule a physical downlink shared channel nor a physical uplink shared channel, wherein the downlink control information includes a request for a hybrid automatic repeat request, HARQ,-acknowledgement, ACK, codebook including HARQ-ACK information bits for all HARQ processes in all cells in the cell group and includes an indication of a resource of a physical uplink control channel;
determining the HARQ-ACK codebook based on the HARQ processes and the downlink control information; and
transmitting the HARQ-ACK codebook on the physical uplink control channel,
wherein HARQ-ACK processes are configured for each of the cells, and
the terminal (20) arranges the HARQ-ACK information bits into the HARQ-ACK codebook in ascending order of the corresponding cell index, and arranges specific HARQ-ACK information bits corresponding to the same cell index of the HARQ-ACK information bits into the HARQ-ACK codebook in ascending order of the corresponding HARQ process number, and
wherein the cell group is configured in a spectrum in which a channel access procedure based on sensing is performed.

4. A base station (10) comprising:
a transmitting section (120) adapted to transmit, in a cell in a cell group, terminal-specific downlink control information that does not schedule a physical downlink shared channel nor a physical uplink shared channel, wherein the downlink control information includes a request for a hybrid automatic repeat request, HARQ,-acknowledgement, ACK, codebook including HARQ-ACK information bits for all HARQ processes in all cells in the cell group and includes an indication of a resource of a physical uplink control channel; and
a control section (110) adapted to control reception of the HARQ-ACK codebook on the physical uplink control channel,
wherein HARQ-ACK processes are configured for each of the cells, and
the HARQ-ACK information bits are arranged into the HARQ-ACK codebook in ascending order of the corresponding cell index, and specific HARQ-ACK information bits corresponding to the same cell index of the HARQ-ACK information bits are arranged into the HARQ-ACK codebook in ascending order of the corresponding HARQ process number, and
wherein the cell group is configured in a spectrum in which a channel access procedure based on sensing is performed.

5. A system (1) comprising the terminal (20) according to claim 1 or 2 and the base station (10) according to claim 4.

## Patentansprüche

1. Endgerät (20), umfassend:
einen Empfangsabschnitt (220), der zum Empfangen, in einer Zelle in einer Zellgruppe, von endgerätespezifischen Downlink-Steuerinformation angepasst ist, die weder einen physischen gemeinsamen Downlink-Kanal noch einen physischen gemeinsamen Uplink-Kanal planen, wobei die Downlink-Steuerinformation eine Anforderung für ein Codebuch einer hybriden automatischen Wiederholungsanfrage-, HARQ, -Bestätigung, ACK, einschließt, das HARQ-ACK-Informationsbits für alle HARQ-Prozesse in allen Zellen in der Zellgruppe einschließt und eine Angabe einer Ressource eines physischen Uplink-Steuerkanals einschließt;
einen Steuerabschnitt (210), der zum Bestimmen des HARQ-ACK-Codebuchs basierend auf den HARQ-Prozessen und der Downlink-Steuerinformation angepasst ist; und
einen Übertragungsabschnitt (220), der zum Übertragen des HARQ-ACK-Codebuchs auf dem physischen Uplink-Steuerkanal angepasst ist,
wobei HARQ-ACK-Prozesse für jede der Zellen konfiguriert sind, und
der Steuerabschnitt (210) so angepasst ist, dass er die HARQ-ACK-Informationsbits in dem HARQ-ACK-Codebuch in aufsteigender Reihenfolge des entsprechenden Zellindex anordnet, und so angepasst ist, dass er spezifische HARQ-ACK-Informationsbits, die dem gleichen Zellindex der HARQ-ACK-Informationsbits entsprechen, in das HARQ-ACK-Codebuch in aufsteigender Reihenfolge der entsprechenden HARQ-Prozessnummer anordnet, und
wobei die Zellgruppe in einem Spektrum konfiguriert ist, in dem ein Kanalzugriffsverfahren basierend auf Abtasten durchgeführt wird.

2. Endgerät (20) nach Anspruch 1, wobei, wenn ein HARQ-ACK-Informationsbit der HARQ-ACK-Informationsbits nicht erzeugt wird, der Steuerabschnitt (210) so angepasst ist, dass er das HARQ-ACK-Informationsbit als negative Bestätigung, NACK, bestimmt.

3. Funkkommunikationsverfahren für ein Endgerät (20), wobei das Verfahren Folgendes umfasst:
Empfangen, in einer Zelle in einer Zellgruppe, von endgerätespezifischen Downlink-Steuerinformation, die weder einen physischem gemeinsamen Downlink-Kanal noch einen physischen gemeinsamen Uplink-Kanal planen, wobei die Downlink-Steuerinformation eine Anforderung für ein Codebuch einer hybriden automatischen Wiederholungsanfrage-, HARQ, -Bestätigung, ACK, einschließen, das HARQ-ACK-Informationsbits für alle HARQ-Prozesse in allen Zellen in der Zellgruppe einschließt und eine Angabe einer Ressource eines physischen Uplink-Steuerkanals einschließt;
Bestimmen des HARQ-ACK-Codebuchs basierend auf den HARQ-Prozessen und der Downlink-Steuerinformation; und
Übertragen des HARQ-ACK-Codebuchs auf dem physischen Uplink-Steuerkanal,
wobei HARQ-ACK-Prozesse für jede der Zellen konfiguriert sind, und
das Endgerät (20) die HARQ-ACK-Informationsbits in dem HARQ-ACK-Codebuch in aufsteigender Reihenfolge des entsprechenden Zellindex anordnet, und spezifische HARQ-ACK-Informationsbits, die dem gleichen Zellindex der HARQ-ACK-Informationsbits entsprechen, in dem HARQ-ACK-Codebuch in aufsteigender Reihenfolge der entsprechenden HARQ-Prozessnummer anordnet, und
wobei die Zellgruppe in einem Spektrum konfiguriert ist, in dem ein Kanalzugriffsverfahren basierend auf Abtasten durchgeführt wird.

4. Basisstation (10), umfassend:
einen Übertragungsabschnitt (120), der zum Übertragen angepasst ist, in einer Zelle in einer Zellgruppe, von endgerätespezifischen Downlink-Steuerinformation, die weder einen physischen gemeinsamen Downlink-Kanal noch einen physischen gemeinsamen Uplink-Kanal planen, wobei die Downlink-Steuerinformation eine Anforderung für ein Codebuch einer hybriden automatischen Wiederholungsanfrage-, HARQ, -Bestätigung, ACK, einschließen, das HARQ-ACK-Informationsbits für alle HARQ-Prozesse in allen Zellen in der Zellgruppe einschließt und eine Angabe einer Ressource eines physischen Uplink-Steuerkanals einschließt; und
einen Steuerabschnitt (110), der angepasst ist, um Empfangen des HARQ-ACK-Codebuchs auf dem physischen Uplink-Steuerkanal zu steuern,
wobei HARQ-ACK-Prozesse für jede der Zellen konfiguriert sind, und
die HARQ-ACK-Informationsbits in dem HARQ-ACK-Codebuch in aufsteigender Reihenfolge des entsprechenden Zellindex angeordnet werden, und spezifische HARQ-ACK-Informationsbits, die dem gleichen Zellindex der HARQ-ACK-Informationsbits entsprechen, in dem HARQ-ACK-Codebuch in aufsteigender Reihenfolge der entsprechenden HARQ-Prozessnummer angeordnet werden, und
wobei die Zellgruppe in einem Spektrum konfiguriert ist, in dem ein Kanalzugriffsverfahren basierend auf Abtasten durchgeführt wird.

5. System (1), umfassend das Endgerät (20) nach Anspruch 1 oder 2 und die Basisstation (10) nach Anspruch 4.

## Revendications

1. Terminal (20) comprenant :
une section de réception (220) adaptée pour recevoir, dans une cellule dans un groupe de cellules, des informations de commande de liaison descendante spécifiques au terminal qui ne programment ni un canal physique partagé de liaison descendante ni un canal physique partagé de liaison montante,
dans lequel les informations de commande de liaison descendante incluent une demande d'un livre de codes HARQ-ACK d'accusé de réception de demande de répétition automatique hybride (HARQ-ACK) incluant des bits d'informations HARQ-ACK pour tous les processus HARQ dans toutes les cellules du groupe de cellules et incluent une indication d'une ressource d'un canal physique de commande de liaison montante (PUCCH) ;
une section de commande (210) adaptée pour déterminer le livre de codes HARQ-ACK sur la base des processus HARQ et des informations de commande de liaison descendante ; et
une section de transmission (220) adaptée pour transmettre le livre de codes HARQ-ACK sur le canal physique de commande de liaison montante,
dans lequel des processus HARQ-ACK sont configurés pour chacune des cellules, et
la section de commande (210) est adaptée à agencer les bits d'informations HARQ-ACK dans le livre de codes HARQ-ACK selon l'ordre croissant de l'indice de cellule correspondant, et est adaptée à agencer des bits d'informations HARQ-ACK spécifiques correspondant au même indice de cellule des bits d'informations HARQ-ACK dans le livre de codes HARQ-ACK selon l'ordre croissant du numéro de processus HARQ correspondant, et
dans lequel le groupe de cellules est configuré dans un spectre dans lequel une procédure d'accès au canal qui est basée sur la détection est effectuée.

2. Terminal (20) selon la revendication 1, dans lequel lorsqu'un bit d'informations HARQ-ACK des bits d'informations HARQ-ACK n'est pas généré, la section de commande (210) est adaptée pour déterminer le bit d'informations HARQ-ACK comme un accusé de réception négatif, NACK.

3. Procédé de communication radio pour un terminal (20), le procédé comprenant les étapes consistant à :
recevoir, dans une cellule dans un groupe de cellules, des informations de commande de liaison descendante spécifiques au terminal qui ne programment ni un canal physique partagé de liaison descendante ni un canal physique partagé de liaison montante,
dans lequel les informations de commande de liaison descendante incluent une demande d'un livre de codes HARQ-ACK d'accusé de réception de demande de répétition automatique hybride (HARQ-ACK) incluant des bits d'informations HARQ-ACK pour tous les processus HARQ dans toutes les cellules du groupe de cellules et incluent une indication d'une ressource d'un canal physique de commande de liaison montante ;
déterminer le livre de codes HARQ-ACK sur la base des processus HARQ et des informations de commande de liaison descendante ; et
transmettre le livre de codes HARQ-ACK sur le canal physique de commande de liaison montante,
dans lequel des processus HARQ-ACK sont configurés pour chacune des cellules, et
le terminal (20) agence les bits d'informations HARQ-ACK dans le livre de codes HARQ-ACK selon l'ordre croissant de l'indice de cellule correspondant, et agence des bits d'informations HARQ-ACK spécifiques correspondant au même indice de cellule des bits d'informations HARQ-ACK dans le livre de codes HARQ-ACK selon l'ordre croissant du numéro de processus HARQ correspondant, et
dans lequel le groupe de cellules est configuré dans un spectre dans lequel une procédure d'accès au canal qui est basée sur la détection est effectuée.

4. Station de base (10) comprenant :
une section de transmission (120) adaptée à transmettre, dans une cellule dans un groupe de cellules, des informations de commande de liaison descendante spécifiques au terminal qui ne programment ni un canal physique partagé de liaison descendante ni un canal physique partagé de liaison montante,
dans laquelle les informations de commande de liaison descendante incluent une demande d'un livre de codes HARQ-ACK d'accusé de réception de demande de répétition automatique hybride (HARQ-ACK) incluant des bits d'informations HARQ-ACK pour tous les processus HARQ dans toutes les cellules du groupe de cellules et incluent une indication d'une ressource d'un canal physique de commande de liaison montante ; et
une section de commande (110) adaptée à commander la réception du livre de codes HARQ-ACK sur le canal physique de commande de liaison montante,
dans laquelle des processus HARQ-ACK sont configurés pour chacune des cellules, et
les bits d'informations HARQ-ACK sont agencés dans le livre de codes HARQ-ACK selon l'ordre croissant de l'indice de cellule correspondant, et des bits d'informations HARQ-ACK spécifiques correspondant au même indice de cellule des bits d'informations HARQ-ACK sont agencés dans le livre de codes HARQ-ACK selon l'ordre croissant du numéro de processus HARQ correspondant, et
dans laquelle le groupe de cellules est configuré dans un spectre dans lequel une procédure d'accès au canal qui est basée sur la détection est effectuée.

5. Système (1) comprenant le terminal (20) selon la revendication 1 ou la revendication 2 et la station de base (10) selon la revendication 4.
